# EUROPÄISCHE PATENTSCHRIFT

(11) **EP 4 272 205 B1**
(45) Veröffentlichungstag und Bekanntmachung des Hinweises auf die Patenterteilung: **21.08.2024**
(21) Anmeldenummer: 22741744.1
(22) Anmeldetag: 30.06.2022
(51) Int. Cl.: G10K 11/168

(54) **AKUSTISCH WIRKSAMES BAUTEIL, AKUSTISCH WIRKSAME FORMTEILE, VERFAHREN ZUR HERSTELLUNG EINES AKUSTISCH WIRKSAMEN BAUTEILS SOWIE AKUSTISCH WIRKSAMER FORMTEILE, VORTEILHAFTE VERWENDUNGEN EINES AKUSTISCH WIRKSAMEN BAUTEILS BZW. AKUSTISCH WIRKSAMER FORMTEILE**
ACOUSTICALLY ACTIVE COMPONENT, ACOUSTICALLY ACTIVE MOLDED PARTS, METHOD FOR PRODUCING AN ACOUSTICALLY ACTIVE COMPONENT AND ACOUSTICALLY ACTIVE MOLDED PARTS, AND ADVANTAGEOUS APPLICATIONS OF AN ACOUSTICALLY ACTIVE COMPONENT OR ACOUSTICALLY ACTIVE MOLDED PARTS
COMPOSANT ACOUSTIQUEMENT ACTIF, PIÈCES MOULÉES ACOUSTIQUEMENT ACTIVES, PROCÉDÉ DE PRODUCTION D'UN COMPOSANT ACOUSTIQUEMENT ACTIF ET DE PIÈCES MOULÉES ACOUSTIQUEMENT ACTIVES, ET APPLICATIONS AVANTAGEUSES D'UN COMPOSANT ACOUSTIQUEMENT ACTIF OU DE PIÈCES MOULÉES ACOUSTIQUEMENT ACTIVES

(30) Priorität: 13.07.2021 DE 102021118113; 07.12.2021 DE 102021132224; 21.03.2022 DE 102022106505
(43) Veröffentlichungstag der Anmeldung: 08.11.2023
(73) Patentinhaber: Carcoustics TechConsult GmbH, 51381 Leverkusen (DE)
(72) Erfinder: PACKHÄUSER, Martin, 51399 Burscheid (DE); WINKLER, Detlef, 38440 Wolfsburg (DE); SEBASTIA, Miguel, 46470 Catarroja-Valencia (ES); SCHÖNZART, Paul, 51381 Leverkusen (DE)
(74) Vertreter: Patentanwälte Bauer Vorberg Kayser
(86) Internationale Anmeldenummer: PCT/EP2022/068195
(87) Internationale Veröffentlichungsnummer: WO 2023/285163

(56) Entgegenhaltungen:
- DE-A1- 102013 101 151
- DE-U1- 9 417 813
- US-A1- 2004 180 177
- US-A1- 2009 264 547
- US-A1- 2011 048 850

## Beschreibung

Gegenstand der vorliegenden Erfindung sind ein akustisch wirksames Bauteil, akustisch wirksame Formteile, Verfahren zur Herstellung eines akustisch wirksamer Formteile sowie vorteilhafte Verwendungen eines akustisch wirksamen Bauteils bzw. akustisch wirksamer Formteile.

Aus dem Stand der Technik sind vielfältige akustisch wirksame Bauteile bekannt. So offenbart die DE 35 06 004 A1 einen akustisch wirksamen Füllkörper, welcher aus einem offenzelligen 3D-geformten Schaumstoffkörper besteht, der mit einer luftundurchlässigen Kunststofffolie umhüllt ist. In der DE 35 06 004 A1 wird vorgeschlagen, entsprechende Füllkörper bei der Herstellung im komprimierten Zustand vorkonfektionieren, so dass diese Füllkörper im Auslieferungszustand unmittelbar in abzudichtende Hohlräume eingesetzt werden können. Nachfolgend soll die Kunststoffumhüllung des Füllkörpers perforiert werden, worauf sich eine Expansion des Füllkörpers ergibt, so dass der Füllkörper den Hohlraum abdichtet und in diesem festgesetzt wird. Nachteilig an dem aus der DE 35 06 004 A1 bekannten Füllkörper ist jedoch, dass die Herstellung eines dreidimensional geformten Schaumstoffblocks mit den aus dem Stand der Technik vorbekannten Verfahren zeitaufwendig und damit kostenintensiv ist.

Sollen komplexer geformte Füllkörper hergestellt werden, so müssen entsprechend dreidimensional geformte Schaumstoffkörper hergestellt werden, was gemäß dem Stand der Technik bevorzugt mittels Formschäumen erfolgt. Hierzu wird eine reaktive Mischung zweier Komponenten in eine beheizte Form eingespritzt, in der die Komponenten miteinander unter Ausbildung eines ggf. auch komplex geformten Schaumstoffblocks ausreagieren. Hierbei sind jedoch die Reaktionszeiten der Komponenten zu beachten, so dass die Ausformung eines solchen Schaumstoffblocks in der Praxis Schließzeiten der Form von 120 Sekunden und darüber erfordert. Dies verursacht hohe Taktzeiten, was die Herstellung verteuert. Akustisch nachteilig ist auch die geschlossene Hülle des Füllkörpers, die schallreflektierend wirkt, so dass die Fähigkeit der Füllung des Füllkörpers zur Schallabsorption wesentlich herabgesetzt ist.

Aus der DE 10 2013 101 151 A1 ist weiterhin ein akustisch wirksamer Füllkörper zur Einführung in einen Hohlraum z.B. einer Fahrzeugkarosserie bekannt. Der Füllkörper umfasst eine Kunststoffhülle sowie ein in die Kunststoffhülle eingebrachtes Schaumstofffüllmaterial. Das Schaumstofffüllmaterial umfasst Schaumstoffflocken, die als Schüttung oder ungeordnete Flocken in die Kunststoffhülle eingebracht sind. Auch bei diesem Füllkörper hat es sich die geschlossene Hülle des Füllkörpers als akustisch nachteilig erwiesen, die schallreflektierend wirkt, so dass die Fähigkeit der Füllung des Füllkörpers zur Schallabsorption wesentlich herabgesetzt ist.

Auf der Verwendung von Schaumstoffflocken basieren auch die aus der EP 0 680 845 A1 bekannten Füllkörper. Die dort offenbarten Füllkörper weisen eine Hülle aus einer gasdichten Folie auf, die mit offen- oder gemischtzelligen Schaumstoffflocken gefüllt, evakuiert und nachfolgend verschlossen wird. Die evakuierten Füllkörper werden dann in akustisch abzudichtende Hohlräume eingebracht, wo die Hülle durchstochen wird, so dass die komprimierten Schaumstoffflocken re-expandieren können, so dass sich ein mechanischer Halt der Füllkörper durch Klemmsitz ergibt. Allerdings hat sich in der Praxis erwiesen, dass die akustische Performance dieser Füllkörper wegen der akustisch harten Hülle über eine reine Abdichtwirkung hinaus begrenzt ist.

Aus der US 2004/180177 A1 ist ein thermoformbares plattenförmiges Akustikfolienmaterial bekannt, welches eine Sperrschicht und eine Absorberschicht aufweist. Die Sperrschicht, ist als teppichartig ausgebildet. Die Sperrschicht dabei so ausgebildet, dass diese den Schall in seiner Ausbreitung behindert und somit eine Barriere schafft. Auch hier wirkt die Sperrschicht schallreflektierend und ist akustisch nachteilig, da die Absorberschicht ihr Potential nicht voll entfalten kann.

Aus der DE 94 17 813 A1 ist ein Füllkörper vorbekannt, der in einen Hohlraum einer Kraftfahrzeugkarosserie einbringbar ist, bestehend aus einem Schaumstofffüllmaterial, das von einer Kunststofffolie umhüllt ist, wobei das Schaumstofffüllmaterial bspw. durch eine Evakuierung der luftdicht abschließenden Umhüllung zur Einführung in den Hohlraum verkleinerbar ist und durch eine Freigabe von Rückstellkräften des Schaumstofffüllmateriales in dem Hohlraum festsetzbar ist. Auch bei diesem Füllkörper hat es sich die geschlossene Hülle des Füllkörpers als akustisch nachteilig erwiesen, die schallreflektierend wirkt, so dass die Fähigkeit der Füllung des Füllkörpers zur Schallabsorption wesentlich herabgesetzt ist.

Die US 2009/264547 A1 befasst sich mit der Beschaffenheit eines Schaumstoffs. Aus der US 2011/048850 A1 ist ein akustischer Verbundwerkstoff vorbekannt, welches ein strömungsbeständiges Substrat mit einem festen akustischen Barrierematerial aufweist.

Vor diesem Hintergrund ist es Aufgabe der vorliegenden Erfindung, ein akustisch wirksames Bauteil bzw. ein akustisch wirksames Formteil anzugeben, das verbesserte akustische Eigenschaften aufweist. Weiterhin ist es Aufgabe der vorliegenden Erfindung, vorteilhafte Verfahren zur Herstellung eines akustisch wirksamen Bauteils sowie akustisch wirksamer Formteile anzugeben. Schließlich ist es Aufgabe der vorliegenden Erfindung, vorteilhafte Verwendungen eines akustisch wirksamen Bauteils bzw. akustisch wirksamer Formteile anzugeben.

Gelöst wird diese Aufgabe durch ein Bauteil gemäß Anspruch 1, durch ein Formteil hergestellt gemäß Anspruch 13 sowie durch eine Verwendung gemäß Anspruch 15.

Es ist darauf hinzuweisen, dass die in den Ansprüchen einzeln aufgeführten Merkmale im Rahmen der Erfindung, welche in den Ansprüchen definiert ist, in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Es sei ferner darauf hingewiesen, dass eine hierin verwendete, zwischen zwei Merkmalen stehende und diese miteinander verknüpfende Konjunktion "oder/und" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Ein erfindungsgemäßes akustisch wirksames Bauteil weist einen aus mindestens einer ersten Decklage gebildeten Beutel auf, der zumindest eine erste Kammer ausbildet. Dabei umfasst die erste Decklage einen flächenhaft ausgedehnten, flexiblen Werkstoff, der einen spezifischen Strömungswiderstand zwischen 10 und 1.500 Rayl (im MKS-System) aufweist, oder besteht aus einem solchen Werkstoff. Genauer wird in der Einheit Rayl die Schallkennimpedanz gemessen, die auch als akustische Feldimpedanz oder spezifische akustische Impedanz bezeichnet wird. Alle Werteangaben in Rayl, die sich auf die vorliegende Erfindung beziehen, beziehen sich auf das MKS-System. Generell gilt, dass 1 Rayl im MKS System 1 Pa·s·m⁻¹ entspricht.

Diese erste Kammer ist mit einer ersten Füllung gefüllt, wobei die erste Füllung Schaumstoffpartikel aufweist.

Die erste Decklage ist ein Vlies oder weist ein solches auf. Die Materialen von erster Decklage oder/und erster Füllung sind thermoplastisch formbar.

Als Schaumstoffpartikel kommen insbesondere zerkleinerte Reste aus einem offenzelligen oder gemischtzelligen Schaumstoff aus PUR (Polyurethan) oder bevorzugt aus viskoelastischem PUR oder Mischungen davon in Frage. Diese Schaumstoffe sind in großen Mengen als Reststoffe verfügbar. Sie fallen beispielsweise bei der Matratzenherstellung an. Auch bei der Produktion von schaumstoffbasierten Stanzteilen, die vielfach im Automotive-Umfeld eingesetzt werden, fallen größere Mengen an Reststoffen an, die vorteilhaft im Rahmen der vorliegenden Erfindung verwendet werden können. Aber auch die Verwendung von zerkleinerten Resten von geeigneten Schaumstoffen aus dem Recycling ist vorteilhaft möglich.

Unter dem Begriff Schaumstoffpartikel sollen darüber hinaus im Rahmen der vorliegenden Erfindung auch einstückige Schaumstoffblöcke verstanden werden, die in ihrer Formgebung an die im Beutel ausgebildete Kammer angepasst sind.

Es wird darauf hingewiesen, dass die Dichte der Füllung einerseits durch die Auswahl des Materials für die Füllung beeinflusst werden kann, andererseits aber auch durch die Füllmenge, die in die erste Kammer eingebracht wird, d.h. durch die Verdichtung des in die Kammer eingebrachten Materials.

Die erfindungsgemäß vorgesehene erste Decklage weist eine akustische Durchlässigkeit auf, die durch eine gezielte Materialauswahl an den spezifischen Verwendungszweck des akustisch wirksamen Bauteils angepasst werden kann.

Als akustisch besonders wirksam im mittleren bis höheren Frequenzbereich des menschlichen Hörspektrums hat sich ein spezifischer Strömungswiderstand zwischen 80 und 120 Rayl erwiesen.

Soll eine besonders hohe Wirksamkeit bei niedrigen Frequenzen des menschlichen Hörspektrums erzielt werden, so hat sich ein spezifischer Strömungswiderstand von 750 Rayl ± 50 Rayl als besonders effektiv erwiesen.

Die erfindungsgemäß vorgesehene Füllung weist ein hohes akustisches Absorptionsvermögen auf, welches durch gezielte Materialauswahl oder / und Materialzusammenstellung an den spezifischen Verwendungszweck des akustisch wirksamen Bauteils angepasst werden kann.

Die Auswahl eines geeigneten Materials für die erste Decklage sowie die Füllung angepasst an den spezifischen Verwendungszweck des akustisch wirksamen Bauteils liegt im Rahmen des üblichen fachmännischen Könnens, worauf an dieser Stelle verwiesen wird.

Die für die Füllung angegebenen Materialen können speziell für die Verwendung im Rahmen der vorliegenden Erfindung hergestellt werden. Vorteilhaft wird jedoch auf Materialen zurückgegriffen, die als Reststoffe bei anderen Herstellungsverfahren anfallen. Diese Reststoffe können auf diese Weise einer sinnvollen Verwendung zugeführt werden und müssen nicht kostenintensiv und ökologisch nachteilig einer geregelten Entsorgung zugeführt werden. Dies erlaubt einerseits die Realisierung von Kostenvorteilen bei der Beschaffung der für die Ausführung der vorliegenden Erfindung erforderlichen Rohstoffe. Andererseits können mit den erfindungsgemäßen Bauteilen hohe Recyclingquoten realisiert werden, ohne dass Qualitätsnachteile in Kauf genommen werden müssten.

Erfindungsgemäß weist der Werkstoff der ersten Decklage ein Vlies auf bzw. besteht aus einem Vlies. Vliese sind in großer Vielzahl mit einer sehr hohen Bandbreite spezifischer Strömungswiderstände auf dem Markt verfügbar, so dass sichergestellt ist, dass ein für einen spezifischen Verwendungszweck geeignetes Material für die erste Decklage verfügbar ist.

Das gleiche gilt, wenn die erste Decklage als mikroperforierte Folie ausgeführt ist, wobei diese Ausführung der ersten Decklage nicht Teil dieser Erfindung ist.

Besonders bevorzugt sind die charakteristischen Abmessungen der einzelnen Mikroperforationen in einer mikroperforierten Folie so gewählt, dass die mikroperforierte Folie zwar eine hohe Durchlässigkeit für Wasserdampf aufweist, zugleich aber eine geringe Durchlässigkeit für flüssiges Wasser. In diesem Zusammenhang hat es sich als vorteilhaft erwiesen, wenn die charakteristischen Abmessungen der Mikroperforationen kleiner sind als 100 Mikrometer und bevorzugt nicht größer sind als 60 Mikrometer. Unter einer charakteristischen Abmessung ist dabei eine Länge zu verstehen, die die typische Größe der einzelnen Mikroperforationen charakterisiert. Beispielsweise ist bei im Wesentlichen runden Mikroperforationen der Durchmesser als charakteristische Abmessung anzusehen.

Unabhängig von der konkreten Ausführung der ersten Decklage hat es sich als vorteilhaft erwiesen, wenn der Werkstoff der ersten Decklage thermisch verschweißbar ist. Dies ist beispielsweise dann gegeben, wenn als Werkstoff für die erste Decklage zumindest auch ein thermoplastisches Material Verwendung findet. Als besonders geeignet haben sich hier PP, PET oder PES erwiesen.

Kommt ein Folienmaterial für die erste Decklage zur Anwendung, so hat sich neben der Verwendung einer einlagigen Folie auch die Verwendung einer Duplofolie als vorteilhaft erwiesen, die zumindest eine Lage aus einem thermoplastischen Werkstoff wie PP, PET oder PES aufweist.

Bevorzugt ist die Folie durch geeignete Zusätze, die aus dem Stand der Technik bekannt sind, flammgeschützt ausgeführt.

Insgesamt ergeben sich Vorteile bezüglich der Verarbeitung der Folie, wenn die verwendete Folie verschweißbar ist. Dabei können sowohl eine thermische Verschweißbarkeit als auch eine Verschweißbarkeit mittels Ultraschalls oder mittels Reibschweißen vorteilhaft sein. Grundsätzlich sind aber auch andere aus dem Stand der Technik bekannte Schweißverfahren vorteilhaft einsetzbar.

Als besonders geeignet im Hinblick auf Reißfestigkeit einerseits und effizientem Materialeinsatz andererseits hat sich die Verwendung einer PE-umfassenden oder aus PE bestehenden Folie mit einer Dicke von nicht weniger als 30 Mikrometern und nicht mehr als 60 Mikrometern, bevorzugt von etwa 40 Mikrometern, erwiesen. Höhere Materialstärken bis hin zu über 100 Mikrometern sind möglich und erlauben eine Erhöhung der Reißfestigkeit.

Als besonders vorteilhaft hat es sich erwiesen, wenn die Dichte der Folie zwischen 0,8 und 1,2 g/cm3 beträgt. Bevorzugt wird eine Folie verwendet, deren Dichte etwa 1,0 g/m3 beträgt.

Für eine erfindungsgemäße erste Decklage aus einem Vlies findet in einer vorteilhaften Ausgestaltung der Erfindung ein thermoplastisches Fasermaterial Verwendung, beispielsweise aus PET-Fasern.

Besonders bewährt hat sich die Verwendung vernadelter Vliese, insbesondere wenn ein auf PET-Fasern basierendes Vlies verwendet wird.

Eine sehr gute Balance aus akustischer Performance und Reißfestigkeit ergibt sich, wenn die Dicke des Vlieses zwischen 0,7 und 1,5 Millimetern beträgt, insbesondere wenn ein vernadeltes Vlies aus PET-Fasern verwendet wird.

Eine sehr gute Balance aus akustischer Performance und Reißfestigkeit ergibt sich weiterhin, wenn das Flächengewicht des Vlieses zwischen 30 und 50 g/m³ beträgt, insbesondere wenn ein vernadeltes Vlies aus PET-Fasern verwendet wird.

Eine sehr gute akustische Performance ergibt sich, wenn die Luftdurchlässigkeit des Vlieses nach DIN EN ISO 9237 etwa 4000 - 6000 l/m²s beträgt.

In einer vorteilhaften Weiterbildung weist ein akustisch wirksames Bauteil gemäß der vorliegenden Erfindung eine zweite flächenhaft ausgedehnte Decklage auf, wobei die erste und die zweite Decklage so miteinander verbunden sind, so dass die erste und die zweite Decklage gemeinschaftlich einen Beutel ausbilden, der eine Kammer aufweist. Hierzu können die erste Decklage und die zweite Decklage beispielsweise randseitig miteinander verbunden sein.

Hierzu ist es von besonderem Vorteil, wenn zumindest der Werkstoff der ersten Decklage oder der Werkstoff der zweiten Decklage verschweißbar sind, bevorzugt aber die Werkstoffe beider Decklagen.

Insgesamt können für die zweite Decklage vorteilhaft ebenfalls alle diejenigen Materialien verwendet werden, die vorstehend als geeignet oder vorteilhaft für die erste Decklage genannt wurden.

Sind erste und zweite Decklage miteinander verschweißbar, so ist das sich ergebende erfindungsgemäße Bauteil thermoformbar, d.h. einem solchen Bauteil kann in einem Formwerkzeug unter Anwendung von Wärme und Druck in einem Umformprozess eine Form aufgeprägt werden, die dauerhaft stabil ist.

Weist das erfindungsgemäße Bauteil eine erste und eine zweite Decklage auf, so ergeben sich vielfältige Anwendungsmöglichkeiten, die nachfolgend beschrieben werden. Dabei wird davon ausgegangen, dass die erfindungsgemäße erste Decklage als Vlies ausgebildet ist.

Ist keine Verwendung des erfindungsgemäßen Bauteils in einer feuchten Umgebung beabsichtigt, so kann es akustisch vorteilhaft sein, wenn die zweite Decklage ein Vlies oder eine mikroperforierte Folie aufweist bzw. aus einer solchen besteht. Insbesondere kann die zweite Decklage einen ähnlichen oder identischen spezifischen Strömungswiderstand wie die erste Decklage aufweisen.

In bestimmten Anwendungsfällen kann es aber auch vorteilhaft sein, wenn die zweite Decklage ein Vlies oder eine mikroperforierte Folie aufweist, die einen spezifischen Strömungswiderstand aufweist, der sich deutlich vom spezifischen Strömungswiderstand der ersten Decklage unterscheidet. Insbesondere kann ein spezifischer Strömungswiederstand von unter 50 Rayl vorteilhaft sein, da eine solche Decklage bereits eine recht hohe Undurchlässigkeit gegenüber flüssigen Medien aufweist.

Insbesondere wenn eine Verwendung des erfindungsgemäßen Bauteils in einer feuchten Umgebung beabsichtigt ist, so kann es vorteilhaft sein, wenn die zweite Decklage eine mediendichte Folie aufweist bzw. aus einer solchen besteht. Derartige Bauteile können in Umgebungen eingesetzt werden, die zumindest eine einseitige Mediendichtheit des Bauteils erfordern. Beispielhaft seien hierfür Türisolationen oder Radhausisolationen für Kraftfahrzeuge genannt.

Die Verwendung einer mediendichten Folie als Werkstoff für die zweite Decklage kann aber auch dann vorteilhaft sein, wenn das erfindungsgemäße akustisch wirksame Bauteil nicht nur schalldämpfende, sondern auch schalldämmende Eigenschaften aufweisen soll. Eine zweite Decklage aus einer mediendichten Folie weist eine hohe Reflektivität für Schall auf, wodurch sich ein gutes Schalldämmvermögen eines solchen erfindungsgemäßen Bauteils ergibt.

Unabhängig von der Wahl der Werkstoffe für die erste und die zweite Decklage sind die erste und die zweite Decklage bevorzugt miteinander vernäht, verpresst, verklebt oder verschweißt. Ist nur eine Decklage vorgesehen, so ist diese zur Ausbildung eines Beutels vorteilhaft mit sich selbst vernäht, verpresst, verklebt oder verschweißt.

Besonders bevorzugt wird eine Verschweißung von erster und zweiter Decklage, da eine Verschweißung fertigungstechnische Vorteile aufweist und ein besonders hohes Maß an Mediendichtheit erlaubt.

In einer vorteilhaften Weiterbildung des erfindungsgemäßen Bauteils ist die erfindungsgemäß vorgesehene Kammer weiterhin mit einer zweiten Füllung gefüllt. Dabei kann auch die zweite Füllung folgende Materialen aufweisen oder aus diesen bestehen:
i. Volumenvlies,
ii. Schaumstoffpartikel,
iii. Synthetische Fasern,
iv. Naturfasern,
v. Partikel einer polymeren oder gummielastischen Schwerschicht, oder
vi. Mischungen der vorgenannten Materialen.

Bezüglich der Eigenschaften der Schaumstoffpartikel wird auf die Ausführungen bezüglich der Schaumstoffpartikel für die erfindungsgemäße (erste) Füllung verwiesen.

Wird ein Volumenvlies verwendet, so hat sich die Verwendung eines Vlieses aus thermoplastischen Fasern, insbesondere Polypropylen (PP)-, Polyethylenterephthalat (PET)- oder Polyethersulfon (PES)-Fasern oder Mischungen der vorgenannten Fasern, als besonders vorteilhaft erwiesen. Dabei können sowohl Flocken von Volumenvliesen als auch flächenhaft ausgedehnte Abschnitte von Volumenvliesen im Rahmen der Erfindung eingesetzt werden.

Auch Reststoffe von flächigen Volumenvliesen, z.B. Verschnittmaterialien wie sie z.B. bei der Produktion von vliesbasierten Stanzteilen anfallen, die vielfach im Automotive-Umfeld eingesetzt werden, können vorteilhaft im Rahmen der vorliegenden Erfindung verwendet werden.

Unter dem Begriff Volumenvlies sollen darüber hinaus im Rahmen der vorliegenden Erfindung auch einstückige Abschnitte von Volumenvliesen verstanden werden, die in ihrer Formgebung an die im Beutel ausgebildete Kammer angepasst sind.

Bei den synthetischen Fasern hat sich die Verwendung von Fasern besonders bewährt, die aus einem thermoplastischen Werkstoff wie PP, PET oder PES bestehen oder zumindest Anteile davon aufweisen. Solche Fasern können insbesondere aus einem Recyclingprozess stammen.

Als besonders vorteilhaft hat sich die Verwendung von sogenannten Bicofasern (= Zweikomponentenfasern) herausgestellt. Diese Fasern bestehen aus zwei Komponenten, die unterschiedliche Schmelz-/Erweichungspunkte aufweisen. Insbesondere vorteilhaft haben sich Bicofasern mit einem Kern aus einem hochschmelzenden polymeren Werkstoff in einer Hülle aus einem niedrigschmelzenden polymeren Werkstoff wie PET erwiesen. Für den Kern können grundsätzlich auch duroplastische polymere Werkstoffe zur Anwendung kommen. In einem Thermoformprozess stellt das Material der Hülle einen Binder dar, während das Material des Kerns für eine hohe mechanische Festigkeit auch bei höheren Temperaturen sorgt.

Als Naturfasern haben sich Bauwollfasern, Fasern aus Kapok, Reis, Hanf oder Flachs als geeignet erwiesen. In einer vorteilhaften Weiterbildung ist den natürlichen Fasern weiterhin ein thermohärtbarer Binder, beispielsweise ein Phenolharz, beigefügt.

Dabei können die erste und die zweite Füllung sowohl unterschiedliche Dichten als auch unterschiedliche Materialien als auch unterschiedliche Materialzusammensetzungen aufweisen. Durch geeignete Auswahl des Materials der ersten und der zweiten Füllung können die akustischen Eigenschaften des erfindungsgemä-βen Bauteils optimal auf den beabsichtigten Verwendungszweck abgestimmt werden.

In einer weiteren vorteilhaften Weiterbildung eines erfindungsgemäßen Bauteils bildet der Beutel zumindest zwei Kammern aus. Dabei ist die zweite Kammer mit einer zweiten Füllung gefüllt. Dabei kann auch die zweite Füllung folgende Materialen aufweisen oder aus diesen bestehen:
i. Volumenvlies,
ii. Schaumstoffpartikel,
iii. Synthetische Fasern,
iv. Naturfasern,
v. Partikel einer polymeren oder gummielastischen Schwerschicht, oder
vi. Mischungen der vorgenannten Materialen.

Es wird darauf hingewiesen, dass im Rahmen der vorliegenden Erfindung die Begriffe Schaumstoffpartikel und Schaumstoffflocken synonym verwendet werden.

Bezüglich der Eigenschaften der vorgenannten Materialen wird auf die Ausführungen bezüglich der als geeignete Materialien für die erfindungsgemäße erste bzw. zweite Füllung der ersten Kammer genannten Materialen verwiesen.

In einer ersten bevorzugten Ausgestaltung der Erfindung sind die erste und die zweite Füllung identisch.

In einer zweiten bevorzugten Ausgestaltung der Erfindung sind die erste und die zweite Füllung verschieden. Dabei können die erste und die zweite Füllung sowohl unterschiedliche Dichten als auch unterschiedliche Materialien als auch unterschiedliche Materialzusammensetzungen aufweisen. Durch geeignete Auswahl des Materials der ersten und der zweiten Füllung können die akustischen Eigenschaften des erfindungsgemäßen Bauteils optimal auf den beabsichtigten Verwendungszweck abgestimmt werden.

Grundsätzlich kann die zweite Füllung in beiden vorgenannten Ausgestaltungen auch Materialen umfassen, die nur ein geringes oder praktisch kein akustisches Absorptionseigenschaften im relevanten Frequenzbereich aufweisen, aber eine relativ hohe Dichte, so dass eine Lage aus einem solchen Material eine zumindest gute akustische Dämmwirkung aufweist.

In einer vorteilhaften Ausgestaltung der Erfindung ist demnach vorgesehen, dass das Material für die zweite Füllung so ausgewählt ist, dass eine Lage aus einem solchen Material eine zumindest gute akustische Dämmwirkung aufweist. Insbesondere ist eine zweite Kammer am erfindungsgemäßen Bauteil bzw. Formteil vorgesehen, die mit diesem Material gefüllt ist. Es ergibt sich ein Bauteil bzw. Formteil, welches neben schallabsorbierenden Eigenschaften auch schalldämmende Eigenschaften aufweist.

Als geeignete Materialien haben sich hier beispielsweise Abschnitte bzw. Partikel aus polymeren, bevorzugt gummielastischen Werkstoffen erwiesen. Aber auch Abschnitte bzw. Partikel, die Schwerschichten von akustisch wirksamen Bauteilen z.B. aus dem Automobilbau umfassen, haben sich grundsätzlich als geeignet erweisen. Diese Abschnitte oder Partikel können beispielsweise in Form eines Granulats vorliegen, in dem eine typische Korngröße von 2 bis 3 Millimetern vorliegt.

In einer weiteren vorteilhaften Weiterbildung eines erfindungsgemäßen Bauteils mit zwei Kammern ist vorgesehen, dass das Bauteil weiterhin eine Zwischenlage aufweist, die die die erste und die zweite Kammer voneinander trennt.

Sind eine erste und eine zweite Decklage vorgesehen, so ist die Zwischenlage vorteilhaft zwischen erster und zweiter Decklage angeordnet, so dass die erste und die zweite Decklage und die Zwischenlage gemeinschaftlich einen Beutel mit zwei Kammern ausbilden. Vorteilhaft, aber nicht zwingend, sind die erste und die zweite Decklage und die Zwischenlage hierzu randseitig miteinander verbunden.

In dieser Weiterbildung kann die Zwischenlage als Vlies, als mikroperforierte Folie oder als mediendichte Folie ausgebildet sein.

Ist die Zwischenlage als Vlies oder als mikroperforierte Folie ausgebildet, so weist sie bevorzugt einen spezifischen Strömungswiderstand zwischen 10 und 1.500 Rayl auf.

Auch hier hat es sich als akustisch besonders wirksam im mittleren bis höheren Frequenzbereich des menschlichen Hörspektrums erwiesen, wenn der spezifische Strömungswiderstand der als Vlies oder als mikroperforierte Folie ausgebildeten Zwischenlage zwischen 80 und 120 Rayl liegt.

Soll hingegen eine besonders hohe Wirksamkeit bei niedrigen Frequenzen des menschlichen Hörspektrums erzielt werden, so hat sich ein spezifischer Strömungswiderstand von 750 Rayl ± 50 Rayl der als Vlies oder als mikroperforierte Folie ausgebildeten Zwischenlage als besonders effektiv erwiesen.

Ist die Folie der Zwischenlage hingegen mediendicht ausgebildet ebenso wie die zweite Decklage, die erste Decklage hingegen nicht, und sind erste Decklage, die zweite Decklage und die Zwischenlage mediendicht miteinander verbunden, z.B. verschweißt, verklebt oder verpresst, so stellt die Zwischenlage eine mediendichte Barriere zwischen der ersten und der zweiten Kammer dar. In dieser Ausgestaltung kann die eine Kammer in feuchter Umgebung eingesetzt werden, wogegen die andere Kammer in trockener Umgebung angeordnet wird, so dass sich ein großes Einsatzspektrum eines solchen Bauteils ergibt.

Aber auch akustisch kann eine solche Ausgestaltung vorteilhaft sein, da die mediendichte Zwischenlage einen effektiven Schallreflektor darstellt, der beispielsweise dazu dienen kann, Schall vom Fahrgastraum eines Kraftfahrzeugs fernzuhalten.

In einer weiteren bevorzugten Ausgestaltung des erfindungsgemäßen Bauteils ist auch das Material der Zwischenlage verschweißbar analog zu der Verschweißbarkeit der ersten und ggf. zweiten Decklage in den vorgenannten bevorzugten Ausgestaltungen des erfindungsgemäßen Bauteils. Hierzu kann die Zwischenlage insbesondere ein thermoplastisches Material wie PP, PET oder PES aufweisen oder aus einem solchen bestehen. In dieser Ausgestaltung ergibt sich eine verbesserte Thermoformbarkeit des resultierenden erfindungsgemäßen Bauteils.

Werden für ein erfindungsgemäßes Bauteil eine erste und eine zweite Füllung verwendet, und zwar unabhängig davon, ob diese in einer gemeinsamen Kammer oder in getrennten Kammern angeordnet sind, so können die erste und die zweite Füllung gleiche Dichten aufweisen. In der Regel werden sie jedoch unterschiedliche Dichten aufweisen, um unterschiedliche akustische Eigenschaften der von der ersten Füllung ausgebildeten ersten Absorberlage und der von der zweiten Füllung ausgebildeten zweiten Absorberlage zu realisieren. Dabei soll im Kontext dieser Ausgestaltung der Begriff Absorberlage weit ausgelegt werden, so dass auch eine Füllung mit einem geringen akustischen Absorptionsvermögen, aber einer hohen akustischen Dämmwirkung als Absorberlage anzusehen ist.

Um in dieser bevorzugten Weiterbildung unterschiedliche akustische Eigenschaften der ersten und der zweiten Absorberlage zu realisieren, können die erste und die zweite Füllung unterschiedliche Materialien oder Materialzusammensetzungen aufweisen. In diesem Fall weisen die erste und die zweite Absorberlage vorteilhaft unterschiedliche Dichten auf, müssen dies aber nicht zwingend.

Selbstverständlich können die erste und die zweite Füllung auch gleiche Materialien oder Materialzusammensetzungen aufweisen. Auch in diesem Fall weisen die erste und die zweite Absorberlage vorteilhaft unterschiedliche Dichten auf, müssen dies aber nicht zwingend.

In einer weiteren vorteilhaften Ausgestaltung des erfindungsgemäßen Bauteils umfassen die erste und ggf. die zweite Füllung Schaumstoffpartikel bzw. bestehen aus diesen. Dabei weisen diese Schaumstoffpartikel bevorzugt einen offen- oder/und einen gemischtzelligen Schaumstoff auf. Auf diese Weise lassen sich hohe akustische Absorptionswerte erzielen.

In dieser Ausgestaltung hat es sich als vorteilhaft erwiesen, wenn die Schaumstoffpartikel eine mittlere Größe von mindestens 10 Millimetern aufweisen. Schaumstoffpartikel, die diese Mindestgröße aufweisen, lassen sich auf einfache Weise auch in automatisierten Produktionsverfahren handhaben.

In dieser Ausgestaltung hat sich weiterhin herausgestellt, dass sich besonders gute akustische Absorptionseigenschaften erzielen lassen, wenn die erste oder/und die ggf. weiterhin vorgesehene zweite Füllung eine mittlere Dichte von 24 kg/m³ ± 6 kg/m³ aufweisen.

Es wird darauf hingewiesen, dass im Rahmen der vorliegenden Erfindung unter der Dichte eines Schaumstoffs bzw. Schaumstoffpartikels stets die Masse pro Volumen des Schaumstoffs in seinem relaxierten Zustand zu verstehen ist, es sei denn, es wird explizit ein anderer Kompressionszustand des Schaumstoffs in Bezug genommen.

Überraschend hat sich herausgestellt, dass auch die Verwendung von Schaumstoffpartikeln mit einer mittleren Dichte von deutlich unter 20 kg/m³, d.h. von 10 kg/m³ bis 15 kg/m³ zur Herstellung von erfindungsgemäßen Bauteilen mit vorteilhaften akustischen Eigenschaften führen kann. Hierzu wird die erste Füllung oder/und ggf. die zweite Füllung bei der Herstellung eines erfindungsgemäßen Bauteils zumindest partiell oder abschnittsweise komprimiert, so dass die Dichte der komprimierten Schaumstoffpartikel über 20 kg/m³ beträgt, bevorzugt über 30 kg/m³ und besonders bevorzugt über 40 kg/m³. Eine solche Verdichtung der Schaumstoffflocken kann beispielsweise beim Thermoformen eines erfindungsgemäßen Bauteils erfolgen.

Weiterhin hat sich herausgestellt, dass thermogeformte erfindungsgemäße Bauteile eine besonders hochwertige Optik aufweisen, wenn die typischen Abmessungen der für die Füllung verwendeten Flocken aus Schaumstoff oder anderen Materialien nicht größer ist als 10 Millimeter, bevorzugt kleiner sind als 10 Millimeter. Dies gilt insbesondere, wenn die Füllung Schaumstoffflocken umfasst oder aus solchen besteht. In dieser Ausgestaltung bildet sich die Struktur der ersten bzw. zweiten Füllung praktisch nicht auf der Oberfläche des thermogeformten Bauteils ab, die Oberfläche erscheint im Wesentlichen strukturlos und damit besonders hochwertig.

Weiterhin hat sich in der vorstehend genannten vorteilhaften Ausgestaltung überraschend in der Praxis als vorteilhaft erwiesen, dass, wenn die erste oder/und die ggf. die weiterhin vorgesehene zweite Kammer ein erstes bzw. zweites Kammervolumen aufweisen und das nicht komprimierte Volumen der ersten bzw. zweiten Füllung etwa 50% ± 15% des ersten bzw. zweiten Kammervolumens beträgt. Anschaulich gesprochen liegt in dieser vorteilhaften Ausgestaltung die erste Füllung bzw. die zweite Füllung in Form einer losen Schüttung von Schaumstoffflocken vor.

Darüber hinaus hat es sich in der vorstehend genannten vorteilhaften Ausgestaltung überraschend in der Praxis als akustisch vorteilhaft erwiesen, wenn für die Füllung ein Gemisch von Schaumstoffpartikeln verwendet wird, das einen ersten Anteil aus nicht viskoelastischem Schaumstoff umfasst und einen zweiten Anteil aus viskoelastischem Schaumstoff.

Überraschend hat sich erwiesen, dass eine Beimischung viskoelastischer Schaumstoffpartikel zu deutlich verbesserten akustischen Eigenschaften der erfindungsgemäßen Bauteile gegenüber den aus dem Stand der Technik vorbekannten gattungsgemäßen Bauteilen führt. Diese Verbesserung betrifft einerseits die schalldämmenden Eigenschaften der Bauteile, andererseits aber auch die schalldämpfenden Eigenschaften. Die schalldämpfenden Eigenschaften können sogar oberhalb einer Grenzfrequenz, die im Bereich von wenigen 100 Hertz liegen kann, besser sein als die eines schalldämpfenden Körpers aus offenzelligem Polyurethanschaumstoff.

Darüber hinaus verlangsamt die Beimischung von Schaumstoffflocken aus einem viskoelastischen Schaumstoff die Rückstellung eines komprimierten erfindungsgemäßen Bauteils. Die Beimischung von viskoelastischen Schaumstoffflocken beispielsweise dem Werker mehr Zeit zur Verfügung, um ein komprimiertes erfindungsgemäßes Bauteil in seine Einbaulage in einem Kraftfahrzeug zu bringen, was die Montage eines solchen Bauteils deutlich vereinfacht. Dies stellt einen in der Praxis wesentlichen Vorteil eines erfindungsgemäßen Bauteils dar.

Bevorzugt macht in dieser Ausgestaltung der erste Anteil einen Gewichtsanteil von mindestens 40% und bis zu 60% der Füllung aus und der Gewichtsanteil des zweiten Anteils maximal 60% und mindestens 40%.

Dabei weist der Schaumstoff des ersten Anteils eine mittlere Dichte von 28 - 40 kg/m³ aufweist, bevorzugt von 28 - 30 kg/m³. Der Schaumstoff des zweiten Anteils hingegen weist eine mittlere Dichte von 40 - 50 kg/m³ auf, bevorzugt von 40 - 45 kg/m³.

Im Rahmen dieser bevorzugten Ausgestaltung haben sich insbesondere Gewichtsverhältnisse von 60% des ersten Anteils zu 40% des zweiten Anteils bzw. von jeweils 50% beider Anteile als akustisch vorteilhaft erwiesen.

Als für diese bevorzugte Ausgestaltung besonders geeignet hat es sich herausgestellt, wenn der Schaumstoff für die Schaumstoffpartikel des ersten oder/und des zweiten Anteils PUR umfasst oder aus PUR besteht. Besonders bevorzugt wird zumindest für die Schaumstoffpartikel des ersten Anteils ein Polyether-Schaumstoff verwendet. Aber auch für die Schaumstoffpartikel des zweiten Anteils kann vorteilhaft ein Polyether-Schaumstoff verwendet.

In einer akustisch besonders vorteilhaften Weiterbildung umfasst der zweite Anteil der Schaumstoffpartikel seinerseits zwei Fraktionen, die sich in ihrer Dichte um mindestens 25% unterscheiden.

So weist in einer besonders bevorzugten Weiterbildung die erste Fraktion des viskoelastischen Anteils eine mittlere Dichte von 40 kg/m³ - 50 kg/m³ auf. Hingegen weist die zweite Fraktion in dieser Weiterbildung eine mittlere Dichte von 70 kg/m³ - 90 kg/m³ auf.

Umfasst der zweite (viskoelastische) Anteil der Schaumstoffpartikel seinerseits zwei Fraktionen, die sich in ihrer Dichte um mindestens 25% unterscheiden, so hat es sich weiterhin als akustisch besonders vorteilhaft erwiesen, wenn der Gewichtsanteil der ersten Fraktion zwischen 80% und 100% beträgt und der Gewichtsanteil der zweiten Fraktion zwischen 20% und 0%. Bevorzugt beträgt der Gewichtsanteil der ersten Fraktion zwischen 85% und 95% und der Gewichtsanteil der zweiten Fraktion zwischen 5 und 15%. In einer ganz besonders bevorzugten Weiterbildung beträgt der Gewichtsanteil der ersten Fraktion etwa 90% und der Gewichtsanteil der zweiten Fraktion etwa 10%.

Überraschend wurde gefunden, dass bereits die Beimischung eines gewichtsmäßig kleinen Anteils von Schaumstoffflocken aus einem dichteren Schaumstoff wie vorstehend vorgeschlagen zu einer deutlichen Verbesserung der akustischen Dämmwirkung eines erfindungsgemäßen Bauteils führt.

Wird ein geeignet ausgebildetes, d.h. thermoformbar ausgebildetes, erfindungsgemäßes Bauteil thermogeformt, so erhält man ein akustisch wirksames Formteil, welches ebenfalls Gegenstand der vorliegenden Erfindung ist. Dieses Formteil weist zumindest schallabsorbierende Eigenschaften auf, kann aber zusätzlich auch schalldämmende Eigenschaften haben.

Bevorzugt sind in einem solchen erfindungsgemäßen Formteil die erste und die ggf. vorgesehene zweite Decklage randseitig vollständig umlaufend miteinander verbunden.

In einer alternativen Ausgestaltung sind in einem solchen erfindungsgemäßen Formteil die erste und die ggf. vorgesehene zweite Decklage randseitig nicht miteinander verbunden. Hierzu kann beispielsweise in einem Stanzvorgang ein sich beim Thermoformen ausbildender, ggf. umlaufender, Rand mittels Stanzen abgetrennt werden.

Auch kann ein solches Teil entstehen, indem das Formteil aus einem thermogeformten, flächenhaft ausgedehnten Materialverbund aus erster und ggf. zweiter Decklage sowie Füllung ausgestanzt wird.

In einer vorteilhaften Weiterbildung weist das erfindungsgemäße Formteil weiterhin eine Falzlinie auf, d.h. einen linienhaft ausgedehnten Bereich verringerter Materialstärke. Eine solche kann beispielsweise im Thermoformprozess, in dem das Formteil ausgebildet wird, in das thermogeformte Bauteil eingebracht werden.

Eine Falzlinie kann dazu dienen, das Formteil anpassbar zu machen an die Geometrie eines dreidimensional geformten Bauteils, an dem das akustisch wirksame Formteil angeordnet werden soll. Bei einem solchen Bauteil kann es sich beispielsweise um ein Karosserieteil eines Kraftfahrzeugs handeln, z.B. ein Radhaus oder eine Motorhaube.

Weiterhin kann ein erfindungsgemäßes Formteil ein Durchgangsloch aufweisen, welches beispielsweise durch Stanzen in das Formteil eingebracht sein kann. In einer besonders bevorzugten Ausgestaltung weist das Durchgangsloch einen umlaufenden Rand verringerter Materialstärke auf.

Die Einbringung eines Rands verringerter Materialstärke, einer oder mehrerer Falzlinien oder/und eines oder mehrerer Durchgangslöcher bevorzugt mit einem Rand mit verringerter Materialstärke sind sämtlich Maßnahmen, die die dreidimensionale Formgebung bzw. Verformbarkeit eines erfindungsgemäßen Formteils vorteilhaft beeinflussen. Diese Ausgestaltungen sind daher ebenfalls Gegenstand der vorliegenden Erfindung.

In einer weiteren vorteilhaften Ausgestaltung der vorliegenden Erfindung weist das erfindungsgemäße akustisch wirksame Formteil eine dauerhafte dreidimensionale Formgebung auf, die insbesondere an die dreidimensionale Formgebung eines Bauteils angepasst sein kann, an welchem das erfindungsgemäße Formteil angeordnet werden soll. Eine solche dreidimensionale Formgebung kann beispielsweise durch Thermoformen eines thermoformbar ausgebildeten erfindungsgemäßen Bauteils erzeugt werden.

Bei Verwendung einer Füllung aus Schaumstoffpartikeln, die einen Gewichtsanteil von mindestens 50% an PUR aufweisen, sind erfindungsgemäße Bauteile thermoformbar. Besonders vorteilhaft ist es, wenn die Schaumstoffpartikel aus PUR bestehen. Thermoformbar bedeutet, dass die dreidimensionale Formgebung derartiger Bauteile in einem Formwerkzeug durch Einwirkung von Hitze dauerhaft verändert werden kann. Überraschend hat sich herausgestellt, dass in einem solchen Fall eine Thermoformbarkeit des erfindungsgemäßen Bauteils auch ohne Zugabe eines wärmehärtenden Binders zur Füllung gegeben ist. Selbstverständlich kann im Einzelfall auch der Zusatz eines thermohärtenden Binders zur Füllung vorteilhaft sein. Dies gilt auch dann, wenn die Füllung Schaumstoffpartikel aufweist, die PUR umfassen.

In einer weiteren vorteilhaften Weiterbildung weist das erfindungsgemäße Bauteil bzw. Formteil außenseitig eine Kleberschicht auf, die dazu vorgesehen ist, das Bauteil bzw. Formteil an einem akustisch zu beeinflussenden Bauteil beispielsweise eines Kraftfahrzeugs festzulegen. Bevorzugt ist diese Kleberschicht vor der Montage des Bauteils mit einem Liner abgedeckt.

In einer weiteren vorteilhaften Weiterbildung schließlich ist das erfindungsgemäße Bauteil bzw. Formteil außenseitig mit einem Armierungsteil mechanisch verbunden, z.B. mittels flächiger oder punktueller Verklebung oder Verschwei-βung. Unter einem Armierungsteil wird im Rahmen der vorliegenden Erfindung ein flächenhaftes, ggf. mit einer 3D-Formgebung versehenes Teil verstanden, welches eine solche Steifigkeit aufweist, dass es eigenstabil ist.

Ein Armierungsteil kann beispielsweise aus einem ggf. faserverstärkten Kunststoff wie GFK oder CFK oder auch aus einem metallischen Werkstoff bestehen bzw. einen solchen Werkstoff aufweisen. Beispielsweise kann es sich um eine akustisch wirksame Abdeckung für ein thermisch belastetes Bauteil des Antriebsaggregats eines Kraftfahrzeugs handeln, z.B. den Zylinderkopf oder die Einspritzanlage eines Verbrennungsmotors.

In einer besonders bevorzugten Weiterbildung bildet das Armierungsteil die erfindungsgemäß vorgesehene zweite Decklage aus.

Erfindungsgemäße thermogeformte Bauteile können besonders vorteilhaft Verwendung finden im Fahrzeugbau als Dämpfungselemente für den Antriebstunnel, als Stirnwände zur Anordnung zwischen Motorraum und Fahrgastzelle, als Radhausabsorber oder als Motorhaubenisolation. Derartige Teile sind ebenfalls Gegenstand der vorliegenden Erfindung.

Ein Verfahren ist zur Herstellung eines akustisch wirksamen Bauteils vorgesehen, insbesondere eines erfindungsgemäßen Bauteils. In seiner einfachsten Ausprägung weist es die folgenden Verfahrensschritte auf:
a) Bereitstellen einer ersten Decklage aus einem flächenhaft ausgedehnten, flexiblen Werkstoff, der einen spezifischen Strömungswiderstand zwischen 10 und 1.500 Rayl aufweist,
b) Ausbilden eines Beutels mindestens aus der ersten Decklage, dergestalt dass der Beutel eine erste Kammer mit einer Zugangsöffnung ausbildet, und
d) Füllen der Kammer mit einer ersten Füllung, wobei die erste Füllung Schaumstoffpartikel aufweist.

Es wird darauf hingewiesen, dass im Rahmen der vorliegenden Erfindung unter der vorgenannten Formulierung "flächenhaft ausgedehnt" auch eine schlauchförmige Konfiguration des ersten Werkstoffs zu verstehen ist. So können beispielsweise Folien direkt in Schlauchform extrudiert werden. Von einem solchen Schlauch können Abschnitte abgelängt und diese einseitig verschlossen werden, so dass sich ein Beutel mit einer Kammer ausbildet. Auch diese Verfahrensführung ist von der vorliegenden Erfindung mit umfasst.

Das Füllen der (ersten) Kammer mit der ersten Füllung kann dabei auf verschiedene Weise erfolgen. In einer ersten Ausgestaltung des erfindungsgemäßen Verfahrens wird die erste Füllung vor dem Einbringen in die erste Kammer in Portionen definierten Gewichts aufgeteilt. D.h. die Füllung wird massemäßig abgemessen und die abgemessene Füllmenge wird nachfolgend von Hand oder maschinell in die erfindungsgemäß im Beutel vorgesehene Kammer eingebracht.

Zur maschinellen Einbringung der Füllung in die Kammer hat sich beispielsweise eine Extrusion der Füllung als vorteilhaft erwiesen, insbesondere wenn als Füllung Schaumstoffpartikel Verwendung finden.

Alternativ kann das maschinelle Befüllen der Kammer mit der Füllung auch in einem schwerkraftgetriebenen Schüttvorgang erfolgen.

Überraschend hat sich aber auch herausgestellt, dass die Verwendung zumindest einer ersten Decklage mit einer gewissen definierten Durchlässigkeit für einen Gasstrom die Anwendung eines alternativen vorteilhaften Füllverfahrens erlaubt. So hat es sich erwiesen, dass die Füllung mittels eines Luftstroms als Transportmedium in die Kammer eingebracht werden kann. Diese Verfahrensführung hat sich als besonders vorteilhaft erweisen, wenn zumindest die erste Decklage einen geringen spezifischen Strömungswiderstand aufweist bzw. die als Füllung verwendeten Partikel eine geringe Dichte bzw. einen hohen Strömungswiderstand aufweisen.

Sowohl die Befüllung der Kammer mittels Extrusion als auch mittels Einblasens oder mittels eines Schüttvorgangs sind besonders gut geeignet für eine Serienfertigung erfindungsgemäßer Bauteile. So kann beispielsweise aus einer flächenhaft ausgedehnten ersten Decklage eine schlauchförmige Hülle gebildet werden, die an einem Ende verschweißt wird, um einen Beutel auszubilden. Dieser Beutel wird nachfolgend mit einer bevorzugt losen Schüttung einer gewichtsmäßig abgemessenen Menge der Füllung befüllt. Abschließend wird das zweite Ende des Beutels verschlossen, bevorzugt verschweißt, so dass ein mit einer Füllung befüllter geschlossener Beutel erhalten wird, der das erfindungsgemäße Bauelement darstellt.

Alternativ kann aus einer flächenhaft ausgedehnten ersten Decklage eine lange schlauchförmige Hülle gebildet werden. Nachfolgend wird diese Hülle in einem quasikontinuierlichen Prozess mit der gewünschten Füllung befüllt. Aus dem sich ergebenden Endloshalbzeug können dann in einem nachfolgenden Prozessschritt erfindungsgemäße Bauteile vereinzelt werden. Die Vereinzelung kann beispielsweise in einem Stanzvorgang erfolgen.

Vorteilhaft wird die Kammer bei dieser Verfahrensführung beim Vereinzeln der Bauteile durch Verbinden der sich gegenüberliegenden Decklagen z.B. mittels Verschweißung verschlossen.

Eine alternative Verfahrensführung sieht folgende Verfahrensschritte vor:
a) Einbringen der ersten Decklage in eine Mulde, beispielsweise eine Werkzeughälfte eines Thermoformwerkzeugs,
b) Einbringen der ersten Füllung in die Mulde,
c) Abdecken der Mulde mit der zweiten Decklage,
d) Verbinden der ersten und der zweiten Decklage unter Ausbildung der Kammer z.B. mittels thermischen Verschweißens.

Dabei wird die Füllung in Schritt b) bevorzugt als lose Schüttung eingebracht.

Als Ergebnis dieses Verfahrens wird ein erfindungsgemäßes Bauteil erhalten.

Es wird darauf hingewiesen, dass die erste und die zweite Decklage auch von einem einfach zusammenhängenden flächigen Werkstück gebildet werden können, das zusammengefaltet wird, so dass sich eine Art Tasche ausbildet, die nachfolgend randseitig verschlossen werden kann.

In einer vorteilhaften Weiterbildung dieses Verfahrens ist vorgesehen, dass die erste Füllung vor dem Verbinden von erster und zweiter Decklage komprimiert wird.

In einer vorteilhaften Weiterbildung dieses Verfahrens ist vorgesehen, dass der Materialverbund aus erster und zweiter Decklage sowie erster Füllung thermogeformt wird. Vorteilhaft ist dem eigentlichen Thermoformschritt ein weiterer Verfahrensschritt vorgeschaltet, in dem Materialverbund vorgewärmt wird, bevorzugt im Thermoformwerkzeug.

Als Ergebnis dieses Verfahrens wird ein erfindungsgemäßes Formteil erhalten.

Weiterhin ist Gegenstand der vorliegenden Erfindung ein Verfahren zur Herstellung eines akustisch wirksamen Formteils, insbesondere eines erfindungsgemä-βen Formteils. Dabei weist das erfindungsgemäße Verfahren zumindest die folgenden Verfahrensschritte auf:
a) Bereitstellen eines erfindungsgemäßen akustisch wirksamen Bauteils oder Herstellen eines akustisch wirksamen Bauteils mit folgenden Schritten:
   Bereitstellen mindestens einer ersten Decklage (10) aus einem flächenhaft ausgedehnten, flexiblen Werkstoff, der einen spezifischen Strömungswiderstand zwischen 10 und 1.500 Rayl aufweist, wobei die erste Decklage ein Vlies ist oder ein solches aufweist,
   Ausbilden eines Beutels mindestens aus der ersten Decklage, dergestalt dass der Beutel eine erste Kammer mit einer Zugangsöffnung ausbildet,
   Füllen der ersten Kammer mit einer ersten Füllung, wobei die erste Füllung Schaumstoffpartikel aufweist,
   Verschließen der Zugangsöffnung zu der ersten Kammer, wobei die Materialen von erster Decklage oder/und erster Füllung thermoplastisch verformbar sind, und
b) Thermoformen des Bauteils.

In der einfachsten Ausgestaltung des Verfahrens wird hierdurch unmittelbar ein akustisch wirksames Formteil ausgebildet.

In einer vorteilhaften Weiterbildung dieses Verfahrens ist vorgesehen, dass nach Schritt b) das Formteil aus dem thermogeformten Halbzeug ausgestanzt wird.

In einer Weiterbildung dieses Verfahrens ist zusätzlich eine zweite Decklage oder/und eine Zwischenlage im bereitgestellten Bauteil vorgesehen.

Überraschend hat sich erwiesen, dass eine Thermoformbarkeit des in diesem Verfahren verwendeten Bauteils bereits dann gegeben sein kann, wenn zumindest eine Lage von erster, zweiter und ggf. Zwischenlage thermoplastisch verformbar ist.

Als Ergebnis dieser vorteilhaften Ausgestaltung des erfindungsgemäßen Verfahrens erhält man vorteilhaftes akustisch wirksames Formteil, welches ebenfalls Gegenstand der vorliegenden Erfindung ist. Dieses akustisch wirksame Formteil weist dabei zumindest die folgenden Merkmale auf:
a) eine erste Decklage aus einem flächenhaft ausgedehnten, flexiblen Werkstoff, der einen spezifischen Strömungswiderstand zwischen 10 und 1.500 Rayl aufweist,
b) eine flächenhaft ausgedehnte zweite Decklage, die mit der ersten Decklage identisch oder zumindest materialidentisch sein kann, aber nicht sein muss,
c) eine zwischen erster und zweiter Decklage angeordnete akustische Absorberlage, wobei die Absorberlage Folgendes aufweist:
   i) Volumenvlies,
   ii) Schaumstoffpartikel,
   iii) Synthetische Fasern,
   iv) Naturfasern, oder
   v) Mischungen der vorgenannten Materialen,

Erfindungsgemäß ist dieses Formteil thermogeformt.

Schließlich ist Gegenstand der vorliegenden Erfindung auch eine vorteilhafte Verwendung eines erfindungsgemäßen Bauteils oder Formteils. Es hat sich erwiesen, dass sowohl ein erfindungsgemäßes Bauteil als auch ein erfindungsgemäßes Formteil aufgrund ihrer jeweiligen akustischen Eigenschaften vorteilhaft als akustisch wirksames Dämpfungselement in einem Kraftfahrzeug Verwendung finden kann.

Dabei kann es bei einem solchen Dämpfungselement insbesondere um ein akustisch wirksames Exterieur- oder Interieurbauteil handeln.

Ganz besonders bevorzugt handelt es sich bei einem solchen Dämpfungselement um eine Motorhaubenisolation, eine Kapsel für einen Elektromotor, um einen Dachhimmelisolation, um eine Längsträgerfüllung, eine Schwellerfüllung, eine A/B/C-Säulenfüllung, eine Stirnwandisolation, einen Tunnelabsorber, eine Türisolation oder um einen Radhausabsorber.

Überraschend hat sich erwiesen, dass die akustische Wirksamkeit eines erfindungsgemäßen Bauteils zunimmt, wenn das Bauteil im eingebauten Zustand im Kraftfahrzeug um mindestens 30% gegenüber seinem Volumen in seiner unkomprimierten Ruhelage verringert ist, bevorzugt um mindestens 50%. Dies gilt insbesondere dann, wenn das Volumen der unkomprimierten Füllung kleiner ist als das Volumen der Kammer des Beutels des betreffenden Bauteils. Dies ist insbesondere dann gegeben, wenn es sich um ein Bauteil gemäß Anspruch 15 handelt.

Abschließend wird darauf hingewiesen, dass die Füllung einer zweiten Kammer, wenn in einem erfindungsgemäßen Bauteil eine zweite Kammer vorgesehen ist, vorteilhaft Gebrauch machen kann von allen vorteilhaften Ausgestaltungen der Füllung der ersten Kammer.

Die vorliegende Erfindung wird nachfolgend anhand von Ausführungsbeispielen unter Bezugnahme auf die beigefügten Figuren eingehend erläutert. Diese Ausführungsbeispiele dienen dazu, dem Fachmann die Ausführung der Erfindung zu erleichtern. Sie beschränken den Gegenstand der Erfindung nicht. Es zeigen:
Fig. 1: ein erstes Ausführungsbeispiel für ein erfindungsgemäßes akustisch wirksames Bauteil in einer seitlichen Schnittdarstellung,
Fig. 2: ein zweites Ausführungsbeispiel eines erfindungsgemäßen akustisch wirksamen Bauteils in einer seitlichen Schnittdarstellung,
Fig. 3: ein drittes Ausführungsbeispiel für ein erfindungsgemäßes Bauteil in Aufsicht,
Fig. 4: ein auf Basis des Bauteils aus Fig. 3 hergestelltes erfindungsgemäßes akustisch wirksames Formteil,
Fig. 5: ein viertes Ausführungsbeispiel für ein erfindungsgemäßes Bauteil in Aufsicht,
Fig. 6: ein auf Basis des Bauteils aus Fig. 5 hergestelltes Halbzeug für erfindungsgemäßes akustisch wirksames Formteil, und
Fig 7: ein aus dem Halbzeug aus Fig. 6 gewonnenes weiteres erfindungsgemäßes Formteil.

In den Figuren bezeichnen - soweit nicht anders angegeben - gleiche Bezugszeichen gleiche oder einander entsprechende Komponenten mit gleicher Funktion.

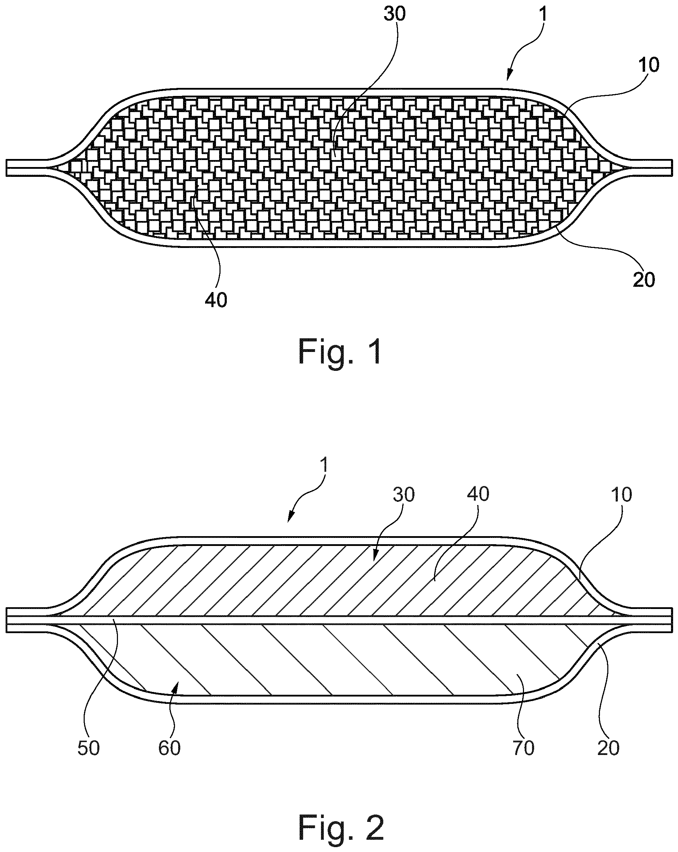

Fig. 1 zeigt ein erstes Ausführungsbeispiel für ein erfindungsgemäßes akustisch wirksames Bauteil 1 in einer seitlichen Schnittdarstellung. Es weist eine erste Decklage 10 aus einem flächenhaft ausgedehnten Vlies auf, welches einen spezifischen Strömungswiderstand von 100 Rayl aufweist.

Eine zweite flächenhaft ausgedehnte Decklage 20 wird ebenfalls von einem flächenhaft ausgedehnten Vlies ausgebildet, welches einen spezifischen Strömungswiderstand von 100 Rayl aufweist.

In einer alternativen Ausgestaltung weisen beide Vliese einen spezifischen Strömungswiderstand von 750 Rayl auf.

Beide Vliese bestehen aus thermoplastischen PET-Fasern, die thermisch verschweißbar sind.

Die erste und die zweite Decklage 10, 20 sind randseitig vollständig umlaufend mittels Verschweißung miteinander verbunden, so dass die erste und die zweite Decklage 10, 20 gemeinschaftlich einen Beutel mit einer Kammer 30 ausbilden.

Die Kammer 30 ist mit einer Füllung 40 gefüllt, die aus Schaumstoffpartikeln aus einem offenzelligen viskoelastischen PUR-Schaum besteht.

In einer bevorzugten Ausgestaltung dieses Ausführungsbeispiels entsprechen die verwendeten Materialien denjenigen der im allgemeinen Teil der Beschreibung dieser Anmeldung zuletzt genannten vorteilhaften Ausgestaltung eines erfindungsgemäßen Bauteils. Insbesondere bestehen sowohl die erste als auch die zweite Decklage 10, 20 aus einem Vlies mit den dort genannten Spezifikationen.

Fig. 2 zeigt ein zweites Ausführungsbeispiel eines erfindungsgemäßen akustisch wirksamen Bauteils in einer seitlichen Schnittdarstellung.

Der Aufbau dieses Bauteils entspricht im Wesentlichen demjenigen des ersten Ausführungsbeispiels. Jedoch weist dieses Bauteil eine Zwischenlage 50 auf, die zwischen erster und zweiter Decklage 10, 20 angeordnet ist. Die erste und die zweite Decklage 10, 20 und die Zwischenlage 50 sind randseitig umlaufend miteinander verbunden, so dass die erste und die zweite Decklage 10, 20 und die Zwischenlage 40 gemeinschaftlich eine Beutel mit zwei Kammern 30, 60 ausbilden.

Die erste Kammer 30 ist analog zur Kammer 30 des ersten Ausführungsbeispiels gefüllt.

Die zweite Kammer 60 hingegen ist mit einer zweiten Füllung gefüllt, die aus Partikeln aus einer einem gummielastischen Werkstoff besteht. Die typische Korngröße der Partikel beträgt etwa 1 mm.

Die erste Kammer 30 bildet einen Schallabsorber aus, die zweite Kammer 60 hingegen eine schalldämmende Schicht.

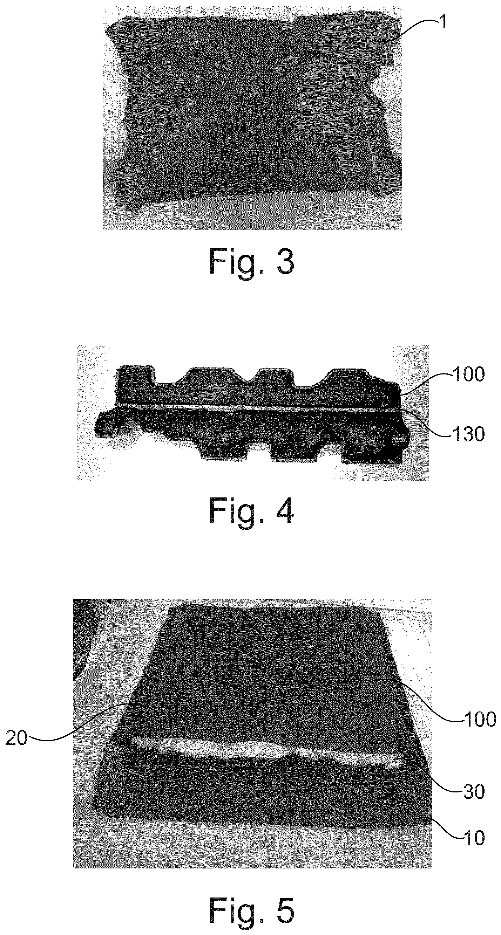

Fig. 3 zeigt ein drittes Ausführungsbeispiel für ein erfindungsgemäßes Bauteil 1 in Aufsicht. Dieses besteht aus einer zusammenhanden Lage aus einem PET-Vlies, welche durch Umschlagen zu einer Beutel geformt ist. Die Beutel ist randseitig thermisch verschweißt. Wiederum kann das Vlies einen spezifischen Strömungswiderstand von 100 Rayl aufweisen. Alternativ kann das Vlies einen spezifischen Strömungswiderstand von 750 Rayl aufweisen.

Die Beutel ist gefüllt mit Flocken aus einem offenzelligen PUR-Schaum, die eine typische Größe von 7 - 15 mm aufweisen. Das Füllgewicht beträgt etwa 40 Gramm pro Quadratmeter.

Fig. 4 zeigt ein auf Basis des Bauteils 1 aus Fig. 3 in einem Thermoformprozess hergestelltes erfindungsgemäßes akustisch wirksames Formteil 100, bei dem es sich um eine Abdeckung für die Common-Rail Einspritzanlage eines verbrennungsmotors handelt. Das Formteil 100 weist eine Falzlinie 130 auf, die dem Formteil 100 eine 3D-Verformbarkeit verleiht.

Fig. 5 zeigt ein viertes Ausführungsbeispiel für ein erfindungsgemäßes Bauteil 1 in Aufsicht. Dieses besteht aus einer zusammenhanden Lage aus einem PET-Vlies, welche durch Umschlagen zu einer Beutel geformt ist. Die Beutel ist randseitig thermisch verschweißt. Wiederum weist das Vlies einen spezifischen Strömungswiderstand von 100 Rayl auf. Die Beutel weist Abmessungen von etwa 50 cm x 60 cm auf.

Die Beutel ist gefüllt mit Flocken aus recycelten PET-Fasern, die einen Anteil von etwa 50 Gew-% an Bicofasern umfassen. Die Bicofasern weisen eine niedrigschmelzende Hülle aus PET auf. Der Schmelzpunkt der Hülle liegt bei etwa 110°C. Das Füllgewicht beträgt etwa 1.000 Gramm pro Quadratmeter.

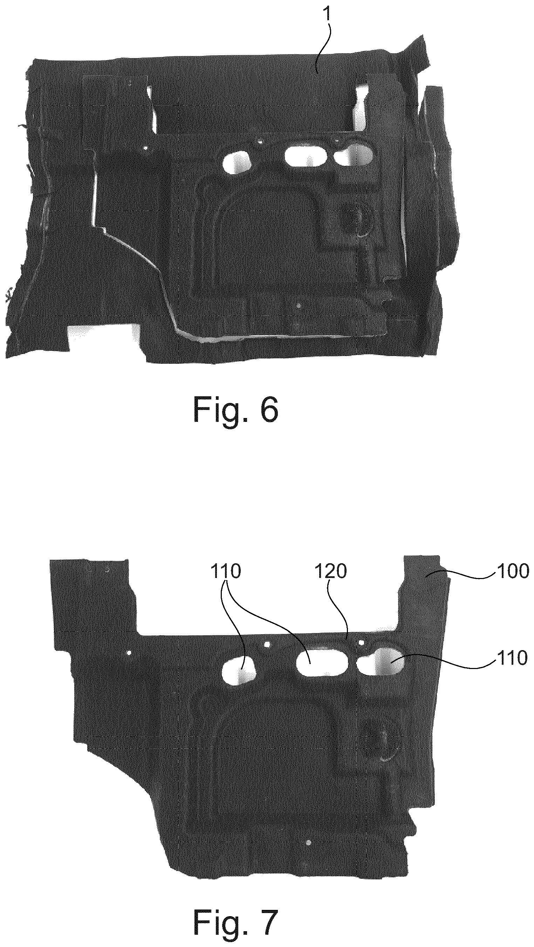

Fig. 6 zeigt ein auf Basis des Bauteils 1 aus Fig. 5 in einem Thermoformprozess hergestelltes Halbzeug für erfindungsgemäßes akustisch wirksames Formteil 100.

Fig. 7 zeigt schließlich ein aus dem Halbzeug aus Fig. 6 mittels Stanzen gewonnenes erfindungsgemäßes Formteil 100, bei dem es sich um eine Stirnwand zur Abtrennung des Fahrgastraums von vom Motorraum eines Kraftfahrzeugs mit Verbrennungsmotor handelt.

Ersichtlich weist das Formteil 100 mehrere Durchgangslöcher 110 auf, die sämtlich einen umlaufenden Rand 120 verringerter Materialstärke aufweisen.

Wie in Fig. 6 deutlich erkennbar ist sind die erste und die zweite Decklage 10, 20 im Halbzeug und damit auch im fertigen Formteil 100 randseitig nicht mehr miteinander verbunden.

In einem weiteren Ausführungsbeispiel wird ein vernadeltes Vlies als erste Decklage bereitgestellt. Das Vlies besteht aus PET-Fasern, die thermoplastisch sind. Dabei beträgt die Dicke des Vlieses etwa 1,10 Millimeter, sein Flächengewicht beträgt 40g/m3. Die Luftdurchlässigkeit des Vlieses nach DIN EN ISO 9237 beträgt 5.500 l/m²s.

Die Decklage wird abschnittsweise zu einem Schlauch geformt, wobei die Längsnaht durch thermische Verschweißung des Vlieses gebildet wird.

Das eine Ende des Schlauchs wird ebenfalls mittels thermischer Verschweißung verschlossen, so dass sich ein Beutel ergibt.

Reste eines offenzelligen, nicht viskoelastischen Polyether-Schaumstoffs werden maschinell zerkleinert, so dass Flocken mit einer Durchschnittsgröße von etwa 15 Millimetern erhalten werden. Der Polyether-Schaumstoff weist eine Dichte zwischen 28 kg/m³ und 40 kg/m³ auf.

Weiterhin werden Reste zweier offenzelliger, viskoelastischer Polyether-Schaumstoffe maschinell zerkleinert, so dass wiederum Flocken mit einer Durchschnittsgröße von etwa 15 Millimetern erhalten werden. Der erste viskoelastische Polyether-Schaumstoff weist eine Dichte zwischen 40 kg/m³ und 50 kg/m³ auf. Der zweite viskoelastische Polyether-Schaumstoff weist eine Dichte von etwa 80 kg/m³ auf.

Die erhaltenen Schaumstoffflocken aus beiden viskoelastischen Schaumstoffen werden im Gewichtsverhältnis von 90% des Schaumstoffs mit der geringeren Dichte und 10% des Schaumstoffs der höheren Dichte in einem maschinellen Mischer gemischt.

Das erhaltene viskoelastische Schaumgemisch wird mit den Schaumstoffflocken aus dem nicht-viskoelastischen Schaumstoff im Gewichtsverhältnis von 40% viskoelastischem Anteil zu 60% nicht viskoelastischem Anteil in einem maschinellen Mischer gemischt.

Von der so erhaltenen Schaumstoffflockenmischung werden einzelne Portionen entnommen, deren Größe anhand des Gewichts der Portionen bestimmt wird. Das Gewicht einer Portion ist so bemessen, dass sich eine Dichte der Füllung im Volumen des gebrauchsfertigen Beutels im Bereich von 24 kg/m³ ergibt.

Die einzelnen Portionen werden schwerkraftgetrieben über einen Trichter als lose Schüttung in einen breitgestellten Vliesbeutel eingebracht. Hierzu ist der Vliesbeutel über die Tülle des Trichters gezogen.

Abschließend wird der gefüllte Beutel einer Schweißanlage zugeführt, die den Beutel mittels thermischer Verschweißung an seinem noch offenen Ende verschließt.

Die typischen Abmessungen der auf diese Weise hergestellten Beutel beträgt in der Länge etwa 10 cm bis zu 150 cm und in der Breite etwa 5 cm bis zu 50 cm.

Werden auf diese Weise erhaltene Beutel um 50% bezüglich ihres Volumens gegenüber ihrer kraftfreien/entspannten Konfiguration komprimiert, so ist ihr akustisches Dämpfungsvermögen ab einer Grenzfrequenz im Bereich von wenigen hundert Hertz höher als das eines reinen Polyether-Schaumstoffs.

In einem abschließenden Ausführungsbeispiel wird eine flächenhaft ausgedehnte Duplofolie bereitgestellt, die eine thermoplastische Lage aus PE umfasst, so dass die Kunststofffolie beispielsweise thermisch verschweißbar ist.

Dabei beträgt die Dicke der Kunststofffolie etwa 40 Mikrometer, ihre Dichte beträgt etwa 1,0 g/cm³.

Weiterhin ist die Kunststofffolie gemäß Stand der Technik flammgeschützt ausgerüstet.

Die Kunststofffolie ist mikroperforiert ausgebildet, wobei die charakteristischen Abmessungen der Mikroperforationen etwa 60 Mikrometer betragen. Die Dichte der Mikroperforationen ist so gewählt, dass die Kunststofffolie einen spezifischen Strömungswiderstand von 100 Rayl ± 20 Rayl aufweist.

Die Kunststofffolie wird abschnittsweise zu einem Schlauch geformt, wobei die Längsnaht durch thermische Verschweißung der Kunststofffolie gebildet wird.

Das eine Ende des Schlauchs wird ebenfalls mittels thermischer Verschweißung verschlossen, so dass sich ein Beutel ergibt.

Reste eines offenzelligen, nicht viskoelastischen Polyether-Schaumstoffs werden maschinell zerkleinert, so dass Flocken mit einer Durchschnittsgröße von etwa 15 Millimetern erhalten werden. Der Polyether-Schaumstoff weist eine Dichte zwischen 28 kg/m³ und 40 kg/m³ auf.

Weiterhin werden Reste zweier offenzelliger, viskoelastischer Polyether-Schaumstoffe maschinell zerkleinert, so dass wiederum Flocken mit einer Durchschnittsgröße von etwa 15 Millimetern erhalten werden. Der erste viskoelastische Polyether-Schaumstoff weist eine Dichte zwischen 40 kg/m³ und 50 kg/m³ auf. Der zweite viskoelastische Polyether-Schaumstoff weist eine Dichte von etwa 80 kg/m³ auf.

Die erhaltenen Schaumstoffflocken aus beiden viskoelastischen Schaumstoffen werden im Gewichtsverhältnis von 90% des Schaumstoffs mit der geringeren Dichte und 10% des Schaumstoffs der höheren Dichte in einem maschinellen Mischer gemischt.

Das erhaltene viskoelastische Schaumgemisch wird mit den Schaumstoffflocken aus dem nicht-viskoelastischen Schaumstoff im Gewichtsverhältnis von 40% viskoelastischem Anteil zu 60% nicht viskoelastischem Anteil in einem maschinellen Mischer gemischt.

Von der so erhaltenen Schaumstoffflockenmischung werden einzelne Portionen entnommen, deren Größe anhand des Gewichts der Portionen bestimmt wird. Das Gewicht einer Portion ist so bemessen, dass sich eine Dichte der Füllung im Volumen des gebrauchsfertigen Beutels im Bereich von 24 kg/m³ ergibt.

Die einzelnen Portionen werden schwerkraftgetrieben über einen Trichter als lose Schüttung in einen breitgestellten Folienbeutel eingebracht. Hierzu ist der Folienbeutel über die Tülle des Trichters gezogen.

Abschließend wird der gefüllte Beutel einer Schweißanlage zugeführt, die den Beutel mittels thermischer Verschweißung an seinem noch offenen Ende verschließt.

Ein derartiges Bauteil weist ein besonders hohes akustisches Absorptionsvermögen im mittleren bis höheren Frequenzbereich des menschlichen Hörspektrums auf.

## Patentansprüche

1. Akustisch wirksames Bauteil (1), aufweisend:
a) einen aus mindestens einer ersten Decklage (10) gebildeten Beutel, der eine erste Kammer (30) ausbildet, wobei die erste Decklage (10) aus einem flächenhaft ausgedehnten, flexiblen Werkstoff besteht,
b) eine erste Füllung (40), die in der ersten Kammer (30) angeordnet ist, wobei die erste Füllung (40) Schaumstoffpartikel aufweist,
c) **dadurch gekennzeichnet, dass** die erste Decklage (10) einen spezifischen Strömungswiderstand zwischen 10 und 1.500 Rayl, 1 Rayl = 1 Pa·s·m⁻¹, aufweist und ein Vlies ist oder ein solches aufweist, wobei die Materialen von erster Decklage (10) oder/und erster Füllung (40) thermoplastisch formbar sind.

2. Akustisch wirksames Bauteil (1) gemäß Anspruch 1, **dadurch gekennzeichnet, dass** das Bauteil eine zweite flächenhaft ausgedehnte Decklage (20) aufweist, wobei die erste und die zweite Decklage (10, 20) randseitig miteinander verbunden sind, so dass die erste und die zweite Decklage (10, 20) gemeinschaftlich den Beutel mit der ersten Kammer (30) ausbilden.

3. Bauteil (1) gemäß Anspruch 1 oder 2, **dadurch gekennzeichnet, dass** der Werkstoff der ersten Decklage (10) oder/und der Werkstoff der zweiten Decklage (20) verschweißbar sind.

4. Bauteil (1) gemäß Anspruch 1 oder 2, **dadurch gekennzeichnet, dass** der Werkstoff der zweiten Decklage (20) ein Vlies ist oder ein solches aufweist.

5. Bauteil (1) gemäß Anspruch 1 oder 4, **dadurch gekennzeichnet, dass** das Vlies der ersten Decklage (10) oder/und das Vlies der zweiten Decklage (20) eines oder mehrere der folgenden Merkmale aufweist:
a) es weist ein thermoplastisches Fasermaterial auf oder ist aus einem solchen gebildet, insbesondere aus PET-Fasern,
b) es handelt sich um ein vernadeltes Vlies,
c) die Dicke des Vlieses beträgt zwischen 0,7 und 1,5 Millimetern,
d) das Flächengewicht des Vlieses beträgt zwischen 30 und 50 g/m³,
e) die Luftdurchlässigkeit des Vlieses nach DIN EN ISO 9237 beträgt 4.000 - 6.000 l/m²s.

6. Bauteil (1) gemäß Anspruch 1 oder 2 **dadurch gekennzeichnet, dass** die erste Decklage (10) zur Ausbildung des Beutels (30) mit sich selbst oder mit der zweiten Decklage (20) vernäht, verpresst, verklebt oder verschweißt ist.

7. Bauteil (1) gemäß Anspruch 1 oder 2, **dadurch gekennzeichnet, dass** der Beutel zumindest eine erste und eine zweite Kammer (30, 60) ausbildet, wobei die zweite Kammer (60) mit einer zweiten Füllung (80) gefüllt ist, wobei die zweite Füllung (80) aufweist:
a) Volumenvlies,
b) Schaumstoffpartikel,
c) Synthetische Fasern,
d) Naturfasern, oder
e) Mischungen der vorgenannten Materialen,
wobei bevorzugt das Bauteil (1) eine Zwischenlage (50) aufweist, die die erste und die zweite Kammer (30, 60) voneinander trennt.

8. Bauteil (1) gemäß Anspruch 2 oder 7, **dadurch gekennzeichnet, dass** der Werkstoff der zweiten Decklage (20) oder/und der Werkstoff der Zwischenlage (50) eine Folie ist oder eine solche aufweist.

9. Bauteil (1) gemäß Anspruch 1 , **dadurch gekennzeichnet, dass** die Schaumstoffpartikel einen offen- oder/und einen gemischtzelligen Schaumstoff aufweisen und bevorzugt die erste und ggf. die zweite Füllung eine mittlere Dichte von 24 kg/m³ ± 6 kg/m³ aufweisen.

10. Bauteil (1) gemäß Anspruch 9, **dadurch gekennzeichnet, dass** für die Füllung (40, 80) ein Gemisch von Schaumstoffpartikeln verwendet wird, das:
a) einen ersten Anteil aus nicht viskoelastischem Schaumstoff umfasst, und
b) einen zweiten Anteil aus viskoelastischem Schaumstoff umfasst,
wobei bevorzugt der erste Anteil einen Gewichtsanteil von mindestens 40% und bis zu 60% der Füllung (40, 80) ausmacht und der Gewichtsanteil des zweiten Anteils maximal 60% und mindestens 40% ausmacht.

11. Bauteil gemäß Anspruch 10, **dadurch gekennzeichnet, dass** die Schaumstoffpartikel des ersten oder/und des zweiten Anteils PUR umfassen oder aus PUR bestehen, besonders bevorzugt Polyether-Schaumstoff.

12. Akustisch wirksames Formteil (100), aufweisend ein thermogeformtes Bauteil (1) gemäß Anspruch 1.

13. Verfahren zur Herstellung eines akustisch wirksamen Formteils (100), folgende Verfahrensschritte aufweisend:
a) Bereitstellen eines akustisch wirksamen Bauteils (1) gemäß Anspruch 1 oder Herstellen eines akustisch wirksamen Bauteils (1) nach folgendem Verfahren:
Bereitstellen mindestens einer ersten Decklage (10) aus einem flächenhaft ausgedehnten, flexiblen Werkstoff, der einen spezifischen Strömungswiderstand zwischen 10 und 1.500 Rayl, 1 Rayl = 1 Pa·s·m⁻¹, aufweist, wobei die erste Decklage (10) ein Vlies ist oder ein solches aufweist,
Ausbilden eines Beutels mindestens aus der ersten Decklage (10), dergestalt dass der Beutel eine erste Kammer (30) mit einer Zugangsöffnung ausbildet,
Füllen der ersten Kammer (30) mit einer ersten Füllung (40), wobei die erste Füllung (40) Schaumstoffpartikel aufweist,
Verschließen der Zugangsöffnung zu der ersten Kammer (30),
wobei die Materialen von erster Decklage (10) oder/und erster Füllung (40) thermoplastisch formbar sind, und
b) Thermoformen des Bauteils (1).

14. Verfahren gemäß Anspruch 13, **dadurch gekennzeichnet, dass** nach Schritt
b) das Formteil (100) aus dem thermogeformten Bauteil (1) ausgestanzt wird.

15. Verwendung eines Bauteils (1) gemäß Anspruch 1 als akustisch wirksames Dämpfungselement in einem Kraftfahrzeug, bevorzugt es sich bei dem Dämpfungselement um ein akustisch wirksames Interieur- oder Exterieurbauteil handelt oder es sich um eine Längsträgerfüllung, eine Schwellerfüllung, eine A/B/C-Säulenfüllung, eine Stirnwandisolation, einen Tunnelabsorber, eine Türisolation oder um einen Radhausabsorber handelt.

## Claims

1. Acoustically-effective component (1), comprising:
a) a pouch formed from at least a first cover layer (10), which forms a first chamber (30), wherein the first cover layer (10) consists of a flexible material with an extended surface area,
b) a first filling (40), which is arranged in the first chamber (30), wherein the first filling (40) comprises foam particles,
c) **characterised in that** the first cover layer (10) has a specific flow resistance of between 10 and 1,500 rayls, where 1 rayl = 1 Pa·s·m⁻¹, and is a non-woven material, or comprises such a material, wherein the materials of the first cover layer (10) and/or the first filling (40), can be moulded thermoplastically.

2. Acoustically-effective component (1) in accordance with Claim 1, **characterised in that** the component comprises a second cover layer (20) with an extended surface area, wherein the first and the second cover layers (10, 20) are joined to one another at the edges, so that the first and the second cover layers (10, 20) together form the pouch with the first chamber (30).

3. Component (1) in accordance with Claim 1 or 2, **characterised in that** the material of the first cover layer (10), and/or the material of the second cover layer, (20) can be welded.

4. Component (1) in accordance with Claim 1 or 2, **characterised in that** the material of the second cover layer (20) is a non-woven material, or comprises such a non-woven material.

5. Component (1) in accordance with Claim 1 or 4, **characterised in that** the non-woven material of the first cover layer (10), and/or the nonwoven material of the second cover layer (20), has one or a plurality of the following features:
a) it has a thermoplastic fibre material, or is formed from such a material, in particular from PET fibres,
b) it takes the form of a needled non-woven material,
c) the thickness of the non-woven material is between 0.7 and 1.5 millimetres,
d) the weight per unit surface area of the non-woven material is between 30 and 50 g/m³,
e) the air permeability of the non-woven material, in accordance with DIN EN ISO 9237, is 4,000 - 6,000 l/m²s.

6. Component (1) in accordance with Claim 1 or 2, **characterised in that** the first cover layer (10) is sewn, pressed, bonded or welded to itself, or to the second cover layer (20), so as to form the pouch (30).

7. Component (1) in accordance with Claim 1 or 2, **characterised in that** the pouch forms at least a first and a second chamber (30, 60), wherein the second chamber (60) is filled with a second filling (80), wherein the second filling (80) comprises:
a) voluminous non-woven material,
b) foam particles,
c) synthetic fibres,
d) natural fibres, or
e) mixtures of the aforementioned materials.
wherein the component (1) preferably has an intermediate layer (50) that separates the first and second chambers (30, 60) from one another.

8. Component (1) in accordance with Claim 2 or 7, **characterised in that** the material of the second cover layer (20), and/or the material of the intermediate layer (50), is a film, or comprises such a film.

9. Component (1) in accordance with Claim 1, **characterised in that** the foam particles comprise an open-cell, and/or a mixed-cell, foam, and the first and, if applicable, the second filling, preferably have an average density of 24 kg/m³ ± 6 kg/m³.

10. Component (1) in accordance with Claim 9, **characterised in that** a mixture of foam particles is used for the filling (40, 80), which:
a) comprises a first component of non-viscoelastic foam, and
b) comprises a second component of viscoelastic foam,
wherein the first component preferably accounts for a proportion by weight of at least 40%, and up to 60%, of the filling (40, 80), and the second component preferably accounts for a proportion by weight of a maximum of 60%, and at least 40%.

11. Component in accordance with Claim 10, **characterised in that** the foam particles of the first and/or the second component comprise PUR, or consist of PUR, particularly preferably polyether foam.

12. Acoustically-effective moulded part (100), comprising a thermoformed component (1) in accordance with Claim 1.

13. Method for the production of an acoustically-effective moulded part (100), comprising the following method steps:
a) provision of an acoustically-effective component (1) in accordance with Claim 1, or the production of an acoustically-effective component (1) in accordance with the following method:
provision of at least a first cover layer (10) made from a flexible material with an extended surface area, which has a specific flow resistance of between 10 and 1,500 rayls, where 1 rayl = 1 Pa·s·m⁻¹, wherein the first cover layer (10) is a non-woven material, or comprises such a non-woven material,
formation of a pouch from at least the first cover layer (10) such that the pouch forms a first chamber (30) with an access opening,
filling of the first chamber (30) with a first filling (40), wherein the first filling (40) comprises foam particles,
closure of the access opening to the first chamber (30), wherein the materials of the first cover layer (10), and/or the first filling (40), can be moulded thermoplastically, and
b) thermoforming of the component (1).

14. Method in accordance with Claim 13, **characterised in that** after step b), the moulded part (100) is stamped out of the thermoformed component (1).

15. Use of a component (1) in accordance with Claim 1 as an acoustically-effective damping element in a motor vehicle, where the damping element preferably takes the form of a side member infill, a sill infill, an A/B/C pillar infill, a bulkhead insulation, a tunnel absorber, a door insulation, or a wheel arch absorber.

## Revendications

1. Composant acoustiquement efficace (1), comprenant:
a) un sac qui est formé d'au moins une première couche de couverture (10) et qui forme une première chambre (30), dans lequel la première couche de couverture (10) est constituée d'un matériau flexible étendue en surface,
b) un premier remplissage (40) qui est disposé dans la première chambre (30), dans lequel le premier remplissage (40) présente des particules de mousse,
c) **caractérisé par le fait que** la première couche de couverture (10) présente une résistance à l'écoulement spécifique comprise entre 10 et 1.500 Rayl, 1 Rayl = 1 Pa·s·m⁻¹, et est ou comprend un non-tissé, dans lequel les matériaux de la première couche de couverture (10) et/ou du premier remplissage (40) peuvent être formés de manière thermoplastique.

2. Composant acoustiquement efficace (1) selon la revendication 1, **caractérisé par le fait que** le composant présente une deuxième couche de couverture (20) étendue en surface, dans lequel les première et deuxième couches de couverture (10, 20) sont reliées l'une à l'autre au niveau du bord de sorte que les première et deuxième couches de couverture (10, 20) forment le sac conjointement avec la première chambre (30).

3. Composant (1) selon la revendication 1 ou 2, **caractérisé par le fait que** le matériau de la première couche de couverture (10) et/ou le matériau de la deuxième couche de couverture (20) sont soudables.

4. Composant (1) selon la revendication 1 ou 2, **caractérisé par le fait que** le matériau de la deuxième couche de couverture (20) est un non-tissé ou présente un tel non-tissé.

5. Composant (1) selon la revendication 1 ou 4, **caractérisé par le fait que** le non-tissé de la première couche de couverture (10) et/ou le non-tissé de la deuxième couche de couverture (20) présente une ou plusieurs des caractéristiques suivantes:
a) il présente un matériau fibreux thermoplastique ou est formé à partir d'un tel matériau, en particulier à partir de fibres PET,
b) il s'agit d'un non-tissé aiguilleté,
c) l'épaisseur du non-tissé est comprise entre 0,7 et 1,5 millimètres,
d) le poids surfacique du non-tissé est compris entre 30 et 50 g/m³,
e) la perméabilité à l'air du non-tissé selon DIN EN ISO 9237 est comprise entre 4.000 et 6.000 l/m²s.

6. Composant (1) selon la revendication 1 ou 2, **caractérisé par le fait que**, pour former le sac (30), la première couche de couverture (10) est cousue, pressée, collée ou soudée sur elle-même ou sur la deuxième couche de couverture (20).

7. Composant (1) selon la revendication 1 ou 2, **caractérisé par le fait que** le sac forme au moins une première et une deuxième chambres (30, 60), dans lequel la deuxième chambre (60) est remplie d'un deuxième remplissage (80), dans lequel le deuxième remplissage (80) présente:
a) du non-tissé volumétrique,
b) des particules de mousse,
c) des fibres synthétiques,
d) des fibres naturelles, ou
e) des mélanges des matériaux susmentionnés,
dans lequel le composant (1) comprend de préférence une couche intermédiaire (50) qui sépare les première et deuxième chambres (30, 60) l'une de l'autre.

8. Composant (1) selon la revendication 2 ou 7, **caractérisé par le fait que** le matériau de la deuxième couche de couverture (20) et/ou le matériau de la couche intermédiaire (50) est une feuille ou comprend une telle feuille.

9. Composant (1) selon la revendication 1, **caractérisé par le fait que** les particules de mousse présentent une mousse à cellules ouvertes et/ou une mousse à cellules mixtes et que, de préférence, le premier remplissage et le cas échéant le deuxième remplissage présentent une densité moyenne de 24 kg/m³ ± 6 kg/m³.

10. Composant (1) selon la revendication 9, **caractérisé par le fait que** l'on utilise pour le remplissage (40, 80) un mélange de particules de mousse qui:
a) comprend une première partie de mousse non viscoélastique, et
b) comprend une deuxième partie de mousse viscoélastique,
dans lequel la première partie représente de préférence une fraction pondérale d'au moins 40 % et jusqu'à 60 % du remplissage (40, 80) et la fraction pondérale de la deuxième partie représente 60 % au maximum et au moins 40 %.

11. Composant selon la revendication 10, **caractérisé par le fait que** les particules de mousse de la première partie et/ou de la deuxième partie comprennent du PUR ou sont constituées de PUR, de manière particulièrement préférée de mousse de polyéther.

12. Pièce moulée acoustiquement efficace (100) comprenant un composant thermoformé (1) selon la revendication 1.

13. Procédé de fabrication d'une pièce moulée acoustiquement efficace (100), comprenant les étapes de procédé suivantes consistant à:
a) fournir un composant acoustiquement efficace (1) selon la revendication 1 ou fabriquer un composant acoustiquement efficace (1) selon le procédé suivant:
fournir au moins une première couche de couverture (10) constituée d'un matériau flexible étendu en surface qui présente une résistance à l'écoulement spécifique comprise entre 10 et 1.500 Rayl, 1 Rayl = 1 Pa·s·m⁻¹, dans lequel la première couche de couverture (10) est un non-tissé ou présente un tel non-tissé,
former un sac à partir d'au moins la première couche de couverture (10) de telle sorte que le sac forme une première chambre (30) ayant une ouverture d'accès,
remplir la première chambre (30) d'un premier remplissage (40), dans lequel le premier remplissage (40) comprend des particules de mousse,
fermer ladite ouverture d'accès à la première chambre (30),
dans lequel les matériaux de la première couche de couverture (10) et/ou du premier remplissage (40) peuvent être formés de manière thermoplastique, et
b) thermoformer le composant (1).

14. Procédé selon la revendication 13, **caractérisé par le fait que**, après l'étape b), la pièce moulée (100) est découpée dans la pièce thermoformée (1).

15. Utilisation d'un composant (1) selon la revendication 1, en tant qu'élément amortisseur acoustiquement efficace dans un véhicule automobile, de préférence l'élément amortisseur est un composant intérieur ou extérieur acoustiquement efficace ou il s'agit d'un remplissage de longeron, d'un remplissage de bas de caisse, d'un remplissage de montant A/B/C, d'une isolation de paroi avant, d'un absorbeur de tunnel, d'une isolation de portière ou d'un absorbeur de passage de roue.
